# EUROPEAN PATENT APPLICATION

(11) **EP 2 500 248 A1**
(43) Date of publication of application: **19.09.2012**
(21) Application number: 11172647.7
(22) Date of filing: 05.07.2011
(51) Int. Cl.: B62K 21/26

(54) **Handlebar grip**

(30) Priority: 15.03.2011 TW 100108822
(71) Applicant: Velo Enterprise Co., Ltd., Dajia Township, Taichung County 437 (TW)
(72) Inventor: Yu, Tsai-Yun, 437 Taichung City (TW)
(74) Representative: Becker Kurig Straus

(57) **Abstract**

A handlebar grip (10) includes an outer tube (20), an inner tube (30) extending inside the outer tube, and an annular space (32) defined between the inner and outer tubes for receiving therein a bicycle handlebar (G). The inner tube has guide slots (34) and an inner guide surface (36) having a gradually decreased diameter. Through a threadedly connecting structure (80) a wedge-shaped member (50) is threaded with a bolt (40) extending into the outer tube in a way that ribs (58) of the wedge-shaped member are inserted in the guide slots of the inner tube respectively. When the bolt is gradually tightened up to drive the wedge-shaped member to move into the inner tube, a circumferential surface (56) of the wedge-shaped member, which is configured to be matched with the inner guide surface of the inner tube, will squeeze the inner tube to expand outwardly so as to clamp the bicycle handlebar between the inner and outer tubes.

## Description

### BACKGROUND OF THE INVENTION

### 1. Field of the Invention

The present invention relates generally to a handlebar of a bicycle or the like and more particularly, to a handlebar grip adapted to be fastened onto the aforesaid handlebar for grip by a user.

### 2. Description of the Related Art

Conventional bicycle handlebars are mostly made of metal bars or tubes, which can not provide a comfortable grip sense to the user. To solve this problem, the bicycle manufacturers will generally attach a handlebar grip, which is made from a resilient material such as a plastic or rubber material, on the metal handlebar. Usually, the inner diameter of the conventional handlebar grip is designed to be smaller than the outer diameter of the handlebar. In assembly, high pressure compressed air conveyed from an air compressor will be introduced into an inside of the handlebar grip to expand the opening of the handlebar grip so as to make the insertion of the handlebar into the handlebar grip possible. After the handlebar is inserted into the handlebar grip and the compressed air is released, the elastic rebound force and the stickiness of the handlebar grip will make the handlebar grip be firmly and sleevedly fastened onto the handlebar, thereby preventing the handlebar grip from escape from and/or rotation relative to the handlebar.

As indicated above, the installation procedure of the conventional handlebar grip is quite complicated and labor-consuming. In addition, if the handlebar grip needs to be detached from the handlebar for replacement, the way of introducing high-pressure compressed air will have to be carried out again. This replacement work can not be easily performed by a general consumer.

US patent Nos. 6,923,089 and 6,964,214 disclosed two handlebar grips, which can solve the problems of the above-mentioned conventional handlebar grip. Compared to the above-mentioned conventional handlebar grip, the procedure of attaching the handlebar grips disclosed in the aforesaid US patents onto the handlebar is indeed more simple and labor-saving in operation. However, they raise a new disadvantage which lies in that because the two handlebar grips both use an urging member that is pressed on the inner wall surface of the handlebar to fasten themselves onto the handlebar, the clamping force between the handlebar and the handlebar grip will drop due to poor manufacturing and/or material aging of the urging member. That is to say, the connecting reliability between the handlebar and the handlebar grip is insufficient to ensure that the handlebar grip will not escape from the handlebar during bicycle riding.

### SUMMARY OF THE INVENTION

The present invention has been accomplished in view of the above-noted circumstances. It is therefore the primary objective of the present invention to provide a handlebar grip for use in cooperation with a bicycle handlebar or the like. The handlebar grip comprises an axially extending outer tube having a shape, such as a cylindrical shape, generally corresponding to the profile of the bicycle handlebar. The outer tube is made from a plastic material and provided with an open end and a closed end. An inner tube, which is also made from a plastic material, extends axially from an inner surface of the closed end of the outer tube towards the open end at a predetermined length. The inner tube has an outer diameter smaller than an inner diameter of the outer tube such that an annular space is defined between the inner and outer tubes. When the bicycle handlebar is inserted through the open end of the outer tube, a section of the bicycle handlebar is inserted into the annular space. In addition, the inner tube has a plurality of guide slots axially extending from a free end of the inner tube, and an inner guide surface extending from the free end of the inner tube towards the other end of the inner tube at a predetermined length with a gradually decreased diameter. The inner guide surface may have a flared shape or the like. Preferably, the inner tube and the outer tube are integrally and coaxially formed with each other. An elongated bolt has a head and a threaded shank axially extending from the head and penetrating through the closed end of the outer tube into the inner tube. A wedge-shaped member has a proximity end, a distal end having a diameter greater than that of the proximity end, a circumferential surface configured to be matched with the inner guide surface, i.e. the diameter of the circumferential surface gradually increases from the proximity end towards the distal ends, and a plurality of ribs on the circumferential surface. In assembly, the wedge-shaped member is threaded with the threaded shank of the elongated bolt by means of a threadedly connecting structure in such a way that the wedge-shaped member is located inside the outer tube, the distal end faces the open end, and the ribs are respectively inserted in the guide slots of the inner tube. In this way, when the elongated bolt is rotatably driven to be tightened up, the wedge-shaped member is driven to move along the inner guide surface into the inner tube to squeeze by its circumferential surface a circumferential wall of the inner tube to expand outwardly, such that the section of the bicycle handlebar, which is located in the annular space, is firmly clamped between the inner tube and the outer tube.

### BRIEF DESCRIPTION OF THE DRAWINGS

The present invention will become more fully understood from the detailed description given herein below and the accompanying drawings which are given by way of illustration only, and thus are not limitative of the present invention, and wherein:
FIG. 1 is a perspective drawing showing that a handlebar grip in accordance with a preferred embodiment of the present invention is fastened onto a handlebar;
FIG. 2 is a partially cut-away view of the handlebar grip and the handlebar shown in FIG. 1;
FIG. 3 is a cross-sectional view taken along line 3—3 of FIG. 1, showing that a section of the handlebar has not been tightly clamped;
FIG. 4 is an exploded view of the handlebar grip according to the preferred embodiment of the present invention;
FIG. 5 is similar to FIG. 3, but showing that the section of the handlebar is tightly clamped between the outer tube and the inner tube, and
FIG. 6 is a cross-sectional view taken along line 6—6 of FIG. 5.

### DETAILED DESCRIPTION OF THE INVENTION

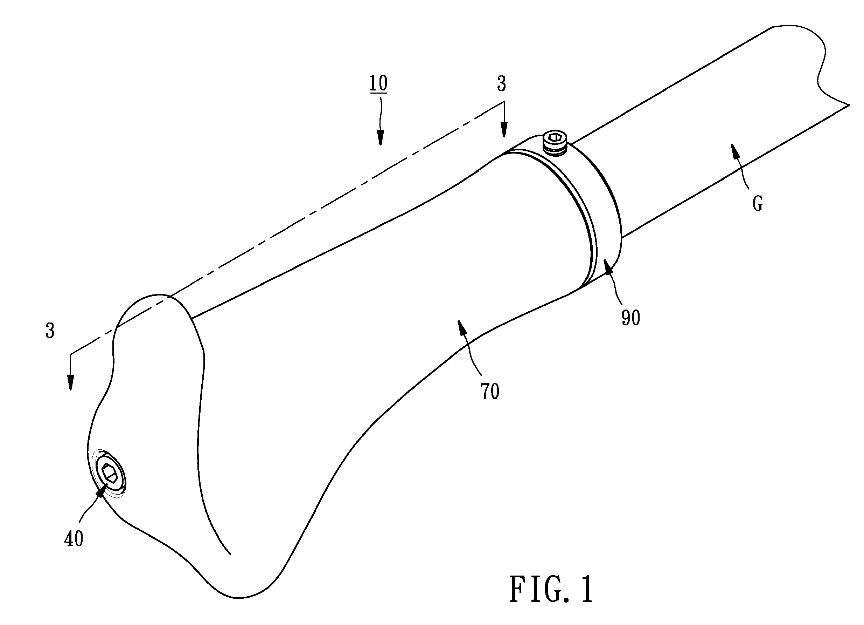

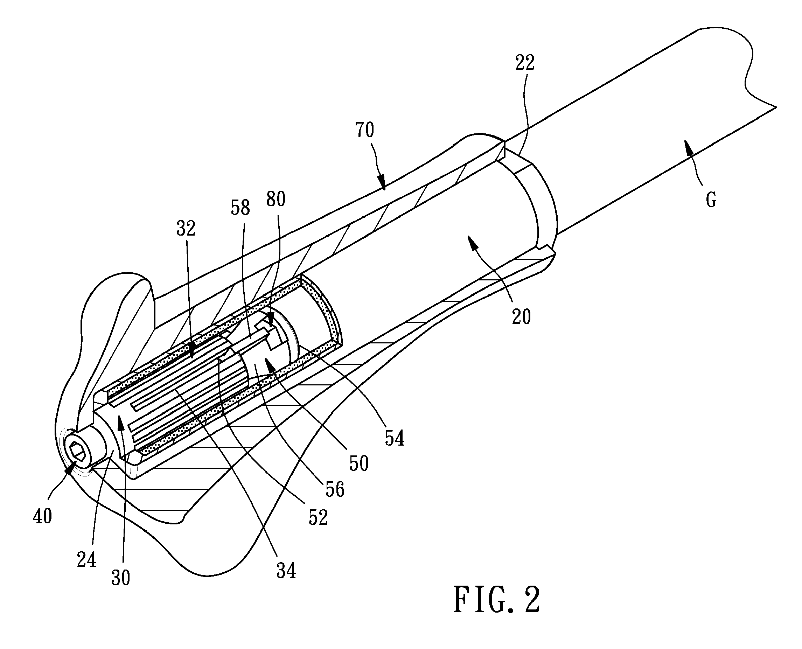

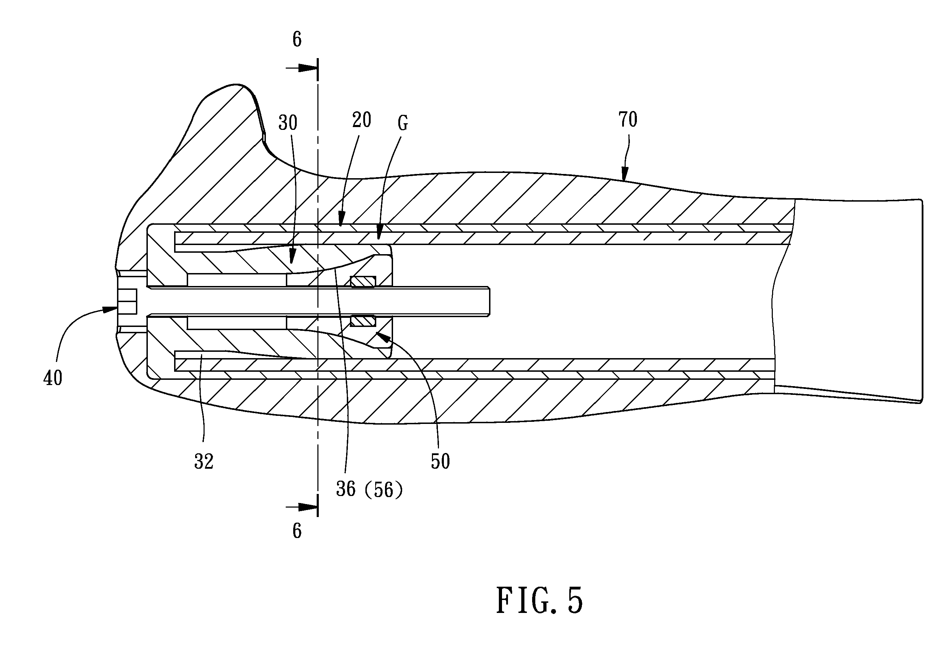

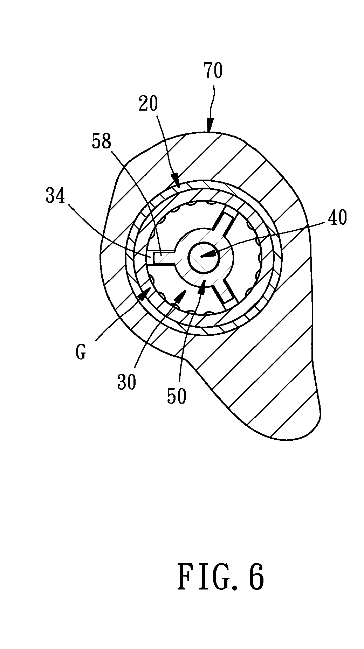

Referring to FIGS. 1-6, a handlebar grip provided according to a preferred embodiment of the present invention is denoted with a reference numeral 10. When the handlebar grip 10 is in use, it is sleeved onto a section of a handlebar G of a vehicle, such as, but not limited to, a handlebar of a bicycle. As shown in the appendix drawings, the handlebar grip 10 comprises an outer tube 20, an inner tube 30, an elongated bolt 40, a wedge-shaped member 50, a grip layer 70 and a threadedly connecting structure 80.

The outer tube 20 is an elongated cylindrical tube configured to serve as a structural support for the whole handlebar grip and made from a plastic material having a proper resilience by molding. The outer tube 20 has an open end 22 and a closed end 24 provided at a center thereof with a center hole 26.

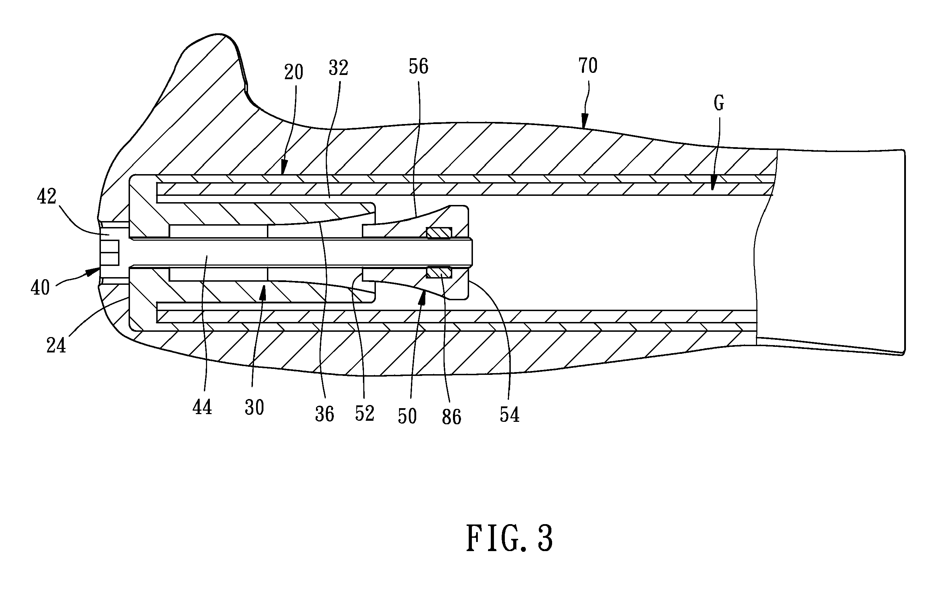

The inner tube 30 is also a cylindrical tube having a length smaller than that of the outer tube 20. In this preferred embodiment, the inner tube 30 is integrally formed with the outer tube 20 and extends axially from the inner surface of the closed end 24 of the outer tube 20 towards the open end 22. That is to say, the inner tube 30 and the outer tube 20 are coaxial to each other and the inner tube 30 has an outer diameter smaller than the inner diameter of the outer tube 20, such that an annular space 32 is defined between the inner tube 30 and the outer tube 20. When the bicycle handlebar G is inserted through the open end 22 of the outer tube 20 into the handlebar grip 10, an anterior section of the handlebar G is inserted into the annular space 32. In addition, the inner tube 30 is provided with three guide slots 34 extending along the axial direction of the inner tube 30 from the free end thereof toward the fixed end thereof at a predetermined length and being circumferentially equiangularly spaced at an angle of 120 degrees from each other. Further, the inner tube 30 is provided with a flared inner guide surface 36 extending from the free end thereof toward the fixed end thereof at a predetermined length, as shown in FIG. 3. Furthermore, the outer circumferential surface of the inner tube 30 is provided with a plurality of axially extending teeth to enhance the clamping force exerting on the bicycle handlebar G.

The elongated bolt 40 is composed of a head 42 and a threaded shank 44 extending longitudinally from the head 42. In assembly, the free end of the threaded shank 44 is inserted through the center hole 26 of the closed end 24 of the outer tube 20 into an inside of the inner tube 30.

The wedge-shaped member 50 includes a proximity end 52, a distal end 54 having a diameter greater than that of the proximity end 52, and a flared circumferential surface 56 between the proximity end 52 and the distal end 54. The profile of the flared circumferential surface 56 is configured to be matched with that of the flared inner guide surface 36 in such a way that when the flared circumferential surface 56 is inserted into the inside of the inner tube 30 to a predetermined extent, the flared circumferential surface 56 will pressurize the circumferential wall of the inner tube 30 to expand outwardly. On the flared circumferential surface 56 of the wedge-shaped member 50 three ribs 58 are circumferentially equiangularly spaced at an angle of 120 degrees from each other. In assembly, the wedge-shaped member 50 is positioned inside the outer tube 20 and screwingly threaded, by means of the threadedly connecting structure 80, with the threaded shank 44 of the elongated bolt 40 in such a way that the distal end 54 faces the open end 22 of the outer tube 20 and the three ribs 58 are respectively inserted into the guide slots 34.

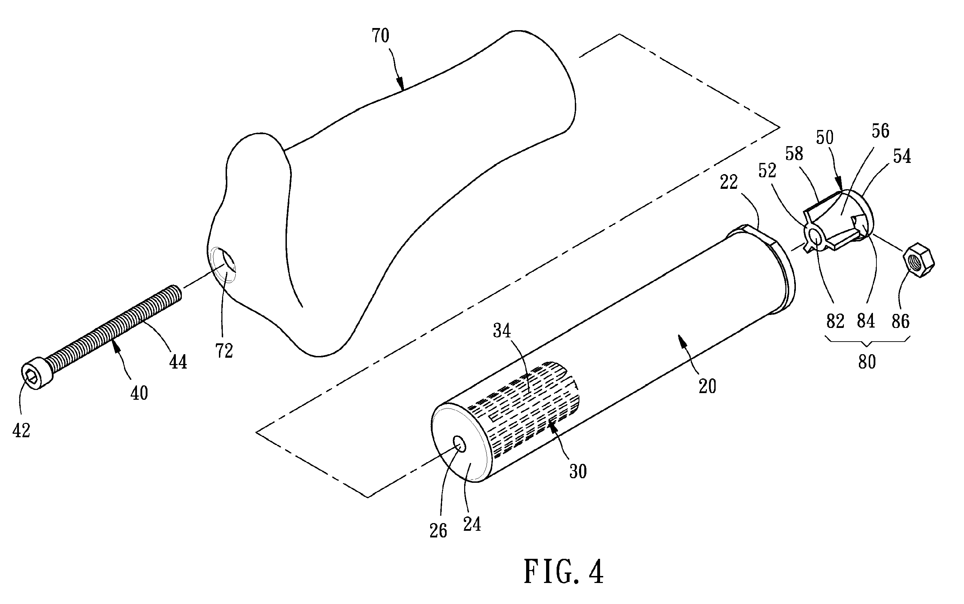

In this preferred embodiment, the threadedly connecting structure 80 is composed of an axially extending through hole 82 at the center of the wedge-shaped member 50, an open chamber 84 disposed inside the wedge-shaped member 50 and communicated with the through hole 82, and a nut 86 fixedly mounted in the open chamber 84, as shown in FIG. 4. In assembly, the threaded shank 44 of the elongated bolt 40 is inserted into the through hole 82 and screwingly threaded with the nut 86.

In order to provide a comfortable grip sense to a bicyclist, the outer tube 20 can be covered with a material having a proper resilience, such as a grip layer 70 made from a rubber or plastic material. In this case, the grip layer 70 is provided at a closed end thereof with a through hole 72 through which the threaded shank 44 of the elongated bolt 40 passes.

To fasten the handlebar grip 10 onto the bicycle handlebar G, the outer tube 20 is sleeved onto the bicycle handlebar G through the open end 22 of the outer tube 20 in such a way that the anterior section of the handlebar G is inserted into the annular space 32. As shown in FIG. 1, an additional retainer 90 may be provided to fix the open end 22 of the outer tube 20 on the handlebar G in advance. However, it is to be understood that the retainer 90 is not a feature of the present invention; therefore, no detailed description thereof is necessarily outlined hereunder.

Next, a proper tool, such as a hex key, is used to drive the elongated bolt 40 to rotate in a tightening up manner. Since the ribs 58 of the wedge-shaped member 50 are respectively inserted into the guide slots 34 of the inner tube 30, the wedge-shaped member 50 will not synchronously rotate along with the elongated bolt 40 but will be driven to axially and linearly move into the inside of the inner tube 30. In other words, when the elongated bolt 40 is gradually tightened up, the flared circumferential surface 56 with a gradually increased diameter will gradually contact and squeeze the flared inner guide surface 36, resulting in that the circumference wall of the inner tube 30 will be gradually forced to expand outwardly so as to firmly clamp the anterior section of the handlebar G, which is inserted in the annular space 32, between the inner tube 30 and the outer tube 20.

As indicated above, since the handlebar grip of the present invention is configured to have the inner tube, the outer tube and the annular space between the inner and outer tubes, the anterior section of the bicycle can be in one hand inserted into the annular space, and in the other hand be firmly clamped by the expanded circumferential wall of the inner tube when the circumferential wall of the inner tube is squeezed to outwardly expand. This feature is totally different from the previously disclosed prior arts. On the other hand, the guide slots provided by the inner tube can in one hand helpfully position the wedge-shaped member through the engagement of ribs of the wedge-shaped member with the guide slots, and in the other hand can provide a guiding effect to facilitate the smoothly and evenly outward expansion of the inner tube. Further, since the inner wall surface of the inner tube is provided with a guide surface matched with the outer circumferential surface of the wedge-shaped member, the inner tube can be smoothly expanded outwardly and the clamping force exerting on the anterior section of the bicycle handlebar can be determined by the location of the wedge-shaped member. In the light of these, the handlebar grip of the present invention can effectively improve the disadvantages of the prior arts.

## Claims

1. A handlebar grip, **characterized in that** the handlebar grip (10) comprises:
an outer tube (20) of a cylindrical shape, which is made from a plastic material and provided with an open end (22) and a closed end (24);
an inner tube (30) of a cylindrical shape, which is made from a plastic material and axially extends from an inner surface of the closed end of the outer tube towards the open end of the outer tube at a predetermined length; the inner tube having an outer diameter smaller than an inner diameter of the outer tube such that an annular space (32) is defined between the inner and outer tubes and configured to receive a section of a bicycle handlebar (G) that is inserted through the open end of the outer tube into the handlebar grip; the inner tube having a plurality of guide slots (34) axially extending from a free end of the inner tube, and an inner guide surface (36) extending from the free end of the inner tube towards the other end of the inner tube at a predetermined length with a gradually decreased diameter;
an elongated bolt (40) having a head (42) and a threaded shank (44) axially extending from the head and penetrating through the closed end of the outer tube into the inner tube;
a wedge-shaped member (50) having a proximity end (52), a distal end (54) having a diameter greater than that of the proximity end, a circumferential surface (56) configured to be matched with the inner guide surface of the inner tube, and a plurality of ribs (58) on the circumferential surface; and
a threadedly connecting structure (80) for threadedly connecting the wedge-shaped member with the threaded shank of the elongated bolt in a way that the wedge-shaped member is located inside the outer tube, the distal end of the wedge-shaped member faces the open end of the outer tube, and the ribs of the wedge-shaped member are respectively inserted in the guide slots of the inner tube;
whereby when the elongated bolt is rotatably driven to be tightened up, the wedge-shaped member is driven to move along the inner guide surface of the inner tube into the inner tube to squeeze a circumferential wall of the inner tube to expand outwardly, such that the section of the handlebar, which is located in the annular space, is clamped between the inner tube and the outer tube.

2. The handlebar grip as claimed in claim 1, **characterized in that** the handlebar grip further comprises a grip layer (70) covering an outer surface of the outer tube.

3. The handlebar grip as claimed in claim 1, **characterized in that** the threadedly connecting structure comprises an open chamber (84) in the wedge-shaped member, a nut (86) mounted in the open chamber, and a though hole (82) in the wedge-shaped member in communication with the open chamber; the threaded shank of the elongated bolt is inserted through the through hole into the open chamber and threaded with the nut.

4. The handlebar grip as claimed 1, **characterized in that** the inner guide surface of the inner tube and the circumferential surface of the wedge-shaped member are configured to be matched to each other with a flared shape.

5. The handlebar grip as claimed in claim 1, **characterized in that** the guide slots of the inner tube are circumferentially spaced at an angle of 120 degrees from each other.

6. The handlebar grip as claimed in claim 5, **characterized in that** the ribs of the wedge-shaped member are circumferentially spaced at an angle of 120 degrees from each other.

7. The handlebar grip as claimed in claim 1, **characterized in that** the outer tube and the inner tube are integrally formed with each other.

8. The handlebar grip as claimed in claim 1, **characterized in that** an outer circumferential surface of the inner tube is provided with a plurality of teeth.
